# EUROPÄISCHE PATENTSCHRIFT

(11) **EP 0 882 273 B1**
(45) Veröffentlichungstag und Bekanntmachung des Hinweises auf die Patenterteilung: **17.05.2000**
(21) Anmeldenummer: 97905080.4
(22) Anmeldetag: 20.02.1997
(51) Int. Cl.: G06K 7/08, G06K 13/08

(54) **ÜBERWACHTER 3-EBENEN HYBRIDLESER (MARESCH-LESER)**
MONITORED 3-PLANE HYBRID READER (MARESH READER)
LECTEUR HYBRIDE EN TROIS DIMENSIONS SURVEILLE (LECTEUR MARESCH)

(30) Priorität: 22.02.1996 DE 19606692
(43) Veröffentlichungstag der Anmeldung: 09.12.1998
(73) Patentinhaber: MARESCH, Klaus, D-81249 München (DE)
(72) Erfinder: MARESCH, Klaus, D-81249 München (DE)
(74) Vertreter: Beetz & Partner Patentanwälte
(86) Internationale Anmeldenummer: EP9700868
(87) Internationale Veröffentlichungsnummer: WO9731326

(56) Entgegenhaltungen:
- EP-A- 0 059 945
- WO-A-89/07802
- WO-A-94/27343
- DE-A- 3 247 781
- DE-A- 3 921 647

## Beschreibung

Die Erfindung betrifft eine Lese- und/oder Schreibvorrichtung für Daten enthaltende Karten und insbesondere einen überwachten Hybridleser, der Multifunktionseigenschaften aufweist und beispielsweise ein Lesen und Schreiben auf einen Magnetstreifen und einen Datenchip der Karte durchführen kann, seine eigene Funktionsfähigkeit zu überprüfen in der Lage ist und zudem die Karte einziehen kann.

Derartige Karten können beispielsweise Kredit- oder Scheckkarten mit einem Magnetstreifen oder auch sog. Chipkarten sein. Weiterhin können natürlich auch kombinierte Karten zur Verwendung kommen, die einen Magnetstreifen und ein Chipfeld aufweisen.

Diese Karten können im allgemeinen als Datenkarten bezeichnet werden und kommen beispielsweise für Zugangskontrollen (Bankfoyer) und Zahlungssysteme (EC-Automaten) zum Einsatz. Ein weiterer Einsatzbereich liegt etwa bei öffentlichen Fernsprechern, die mit Hilfe vorausbezahlter Telefonkarten zu betreiben sind.

Derartige Telefonkarten weisen eine integrierte Schaltung "Chip" auf, der in die Karte eingebettet ist. Dieser Chip speichert einen Zahlenwert, der ein Guthaben darstellt und ist elektrisch mit Kontaktfeldern der Karte verbunden, die auf einer Seite der Karte bündig mit der Oberfläche abschließen, so daß sie von außen zugänglich sind. Ein Benutzer führt eine solche Chipkarte in eine Lese-/Schreibvorrichtung des Fernsprechers ein, so daß die Kontaktfelder mit einer Steuerschaltung des Fernsprechers verbunden sind. Das im Chip der Karte gespeicherte Guthaben wird gelesen und im Laufe eines Telefongesprächs durch Schreibvorgänge auf dem Chip verringert. Nach Beendigung des Telefongesprächs erhält der Benutzer die Chipkarte zurück.

Auf ähnliche Weise funktionieren Kredit- oder Scheckkarten, die in einen Leseautomaten eingeführt werden und von denen bei Geldabhebungen Daten entnommen werden. Dies erfolgt üblicherweise durch ein Lesen des Magnetstreifens.

Die oben beschriebenen Lese-/Schreibvorrichtungen kommen oftmals bei rauhen Umweltbedingungen zum Einsatz, beispielsweise für außen angeordnete EC-Automaten oder bei Garagenzugangskontrollen. Somit müssen derartige Vorrichtungen auch bei tiefen Temperaturen oder bei einer hohen Luftfeuchtigkeit zuverlässig funktionieren.

Die EP-A-0 468 146 zeigt eine Vorrichtung zum Lesen und Beschreiben von Wertkarten. Beim Einführen einer Wertkarte in die Vorrichtung wird eine Kartenaufnahme und damit ein Angriffspunkt einer Druckfeder manuell verschoben. Sobald ein Totpunkt überschritten ist, wird die Kartenaufnahme schlagartig in eine zweite Endstellung transportiert, wobei sie die Wertkarte in das Innere der Vorrichtung zieht. Kurz vor der zweiten Endstellung erfolgt ein Lesen bzw. Beschreiben der Wertkarte.

Lese-/Schreibvorrichtungen, welche zum Transport der Karten und/oder des Tonkopfs einen Riemenantrieb verwenden, müssen beispielsweise bei tiefen Temperaturen im Winter beheizt werden, um ein zuverlässiges Funktionieren des Riemenantriebs zu gewährleisten. Als weiteren Nachteil wäre bei riemenbewegten Karten aufzuführen, daß die Reibkraft der Riemen mit deren Verschmutzung abnimmt, so daß eine Positionierung der Karte nicht mehr nur durch eine Laufzeit erfolgen kann, sondern eine genaue Positionsüberwachung der Karte zur Steuerung des Riemenantriebs notwendig wird. Ein weiterer Nachteil dieser Antriebsart besteht darin, daß der Riemen von seiner Führungs- bzw. Antriebsrolle springen kann, wenn dieser etwa durch einen in den Karteneinführschlitz eingeführten Gegenstand blockiert wird.

Weiterhin ist es wünschenswert, daß der Kartenleser nicht mutwillig zerstört werden kann, beispielsweise durch das Einführen von Schmirgelpapier oder anderen Gegenständen, die eventuell zu einem Blockieren der Kartenlesemechanik führen können und eventuell den Tonkopf beschädigen (oder zu dem schon oben erwähnten Herunterspringen der Kartenantriebsbänder führen können).

Ein Ausfall eines Kartenlesers, beispielsweise wenn er für ein Tankstellenzahlsystem eingesetzt wird, führt zu einem finanziellen Verlust für den Betreiber des Kartenlesers und zu unzufriedenen Kunden, so daß die Betriebssicherheit ein entscheidender Faktor für den Einsatz einer derartigen Vorrichtung ist.

Die Aufgabe der Erfindung besteht darin, eine Lese- und/oder Schreibvorrichtung für Daten enthaltende Karten zu schaffen und ein Verfahren zum Steuern einer solchen Vorrichtung zu realisieren, die eine hohe Ausfallsicherheit gewährleisten und einen einfachen und kostengünstigen Aufbau aufweisen.

Die Aufgabe wird gemäß den Merkmalen der unabhängigen Patentansprüche gelöst. Die abhängigen Patentansprüche zeigen Ausführungsbeispiele und vorteilhafte Weiterentwicklungen der Erfindung auf.

Die erfindungsgemäße Lese- und/oder Schreibvorrichtung weist eine Führung auf, in der verschiebbar ein Schlitten angeordnet ist. Dieser Schlitten kann die Karte aufnehmen. Auf dem Schlitten ist ein Wagen verschiebbar angeordnet. Weiterhin ist eine Antriebseinheit vorgesehen, die eine Relativbewegung zwischen dem Wagen und dem Schlitten derart herstellt, daß eine Lese-/Schreibeinheit über auf der Karte vorgesehene Datenfelder bewegt werden kann. Dadurch ist eine gewünschte Datenlesung bzw. ein gewünschtes Einschreiben von Daten in die Datenfelder möglich.

Die Schreib-/Leseeinheit kann einen Tonkopf enthalten, der am Wagen angeordnet ist und über den Magnetstreifen der Karte oder einen Testmagnetstreifen bewegt werden kann.

Die Schreib-/Leseeinheit kann weiterhin einen Chiplesesatz enthalten, der am Schlitten angeordnet ist und über die Karte oder ein Testchip bewegt werden kann. Der Testchip kann am Wagen angeordnet sein.

Durch die erfindungsgemäße Ausbildung der Lese-/Schreibvorrichtung kann ein multifunktionaler, 3-Ebenen Hybridleser realisiert werden, wobei die Führung, der Schlitten und der Wagen jeweils eine Ebene des Lesers darstellen.

Erfindungsgemäß kann weiterhin ein Anschlag vorgesehen sein, wobei die Antriebseinheit eine Relativbewegung zwischen dem Schlitten und der Führung dann verursacht, wenn der Wagen mit dem Anschlag zur Anlage gelangt. Somit wird bei einem anliegenden Wagen der Schlitten verschoben.

Gemäß einer weiteren Ausführungsform kann die Antriebseinheit am Wagen vorgesehen sein.

Der erfindungsgemäße Hybridleser kann durch das Vorsehen einer einzigen am Wagen angeordneten Antriebseinheit, welche beispielsweise in eine Verzahnung des Schlittens eingreifen kann, sämtliche Funktionen eines Multifunktionslesers durchführen.

In einer Ausgangs- bzw. Grundposition des Lesers befindet sich der Wagen an einem hinteren Anschlag. Damit ist der mit dem Tonkopf versehene Wagen sehr sabotagesicher positioniert, da er eine maximale Entfernung von dem Einführschlitz für die Karten aufweist; er ist damit von außen praktisch nicht mehr erreichbar.

Nach dem Einschieben der Karte durch den Einführungsschlitz und nach der Betätigung eines entsprechenden Kontaktes durch die Karte wird die Antriebseinheit des Wagens derart bewegt, daß sich derselbe von seiner hinteren Stellung in Richtung auf den Einführschlot bewegt. Dadurch bewegt sich der Wagen mit dem Tonkopf über die eingeführte Karte. Nachdem der Wagen mit einem vorderen Anschlag in Kontakt kommt wird die Antriebseinheit noch weiter betrieben, so daß sich nun nicht mehr der Wagen bewegt sondern der mit der Antriebseinheit des Wagens in einer Wirkverbindung stehende Schlitten. Der Schlitten wird infolgedessen entgegengesetzt zu der vorangehenden Bewegungsrichtung des Wagens verschoben, d.h. nach hinten. Mit dieser Bewegung kann gleichzeitig der Chiplesesatz angehoben werden und mit dem Datenchip der Karte in Kontakt kommen. Dadurch wird die in den Schlitten eingeschobene Karte an demselben fixiert und aus dem Zugriffsbereich des Benutzers entfernt, wobei ein später noch beschriebenes Verriegelungselement den Einführungsschlitz verschließt.

Eine Bewegung des Schlittens kann somit dadurch bewirkt werden, daß der Wagen an einem hinteren oder vorderen Anschlag ansteht und damit die durch die Antriebseinheit ausgeübte Kraft auf die Verzahnung des Schlittens in einer Verschiebung des Schlittens resultiert.

Die Steuerung der Bewegung des Wagens und/oder der Bewegung des Schlittens kann entweder durch geeignete Kontakte erfolgen, etwa beim Einsatz eines Gleichstrommotors als Antriebseinheit oder durch eine entsprechende Schrittmotorsteuerung, wenn ein Schrittmotor als Antriebseinheit verwendet wird. Natürlich sind auch andere Antriebsarten denkbar, wie etwas ein Spindelantrieb oder eine hydraulische Betätigung. Die Kontakte können mechanische Schaltelemente sein. Es ist aber auch denkbar, Lichtschranken oder induktiv wirkende Hall-Sensoren einzusetzen.

An dieser Stelle sei angemerkt, daß der erfindungsgemäße Leser ebenso als Karteneinzugsleser verwendet werden kann, wenn etwa der Wagen stets fest mit der Führung verbunden ist. Nach einem Einschieben der Karte in den Schlitten wird dann derselbe durch eine Betätigung der Antriebseinheit nach hinten verschoben. Dabei kann die Karte über den Tonkopf gelesen bzw. beschrieben werden. Der Wagen ist in diesem Fall als Tonkopfbrücke ausgebildet.

Weiterhin kann der erfindungsgemäße Leser als automatischer Kartensteckleser ausgebildet sein. In diesem Fall ist der Schlitten mit der Führung fest verbunden.

Die oben genannten festen Verbindungen zwischen dem Wagen und der Führung oder dem Schlitten und der Führung können jeweils durch das Vorsehen nur eines Bauteils für beide Elemente realisiert werden.

Gemäß einer weiteren Ausführungsform kann der Wagen einen Mitnehmer aufweisen, der mit einer Stirnseite der Karte in Eingriff treten kann, um die Karte einzuziehen. Dazu wird die Antriebseinheit des Wagens nach Inanschlagkommen des Wagens mit dem vorderen Anschlag um einen vorbestimmten Betrag derart weiterbetrieben, daß sich der Schlitten mit der daran festgelegten Karte in eine zweite Richtung bewegt (nach hinten), bis der Mitnehmer über die Stirnseite der Karte schnappt und dieselbe dann bei einer nachfolgenden Bewegung des Wagens in die zweite Richtung (nach hinten) mitnimmt. Dadurch kann die Karte nach hinten aus dem Leser geschoben werden.

In einer weiteren Ausführungsform der Erfindung kann der Schlitten Klemmelemente aufweisen, die in Vertiefungen eines Basisteils einrasten können. Diese Klemmelemente können derart ausgebildet sein, daß sie mit der Karte in eine Wirkverbindung treten, wenn die Klemmelemente nicht in die Vertiefungen eingerastet sind.

Dadurch ist es möglich, die Karte nach dem Einschieben durch den Einführungsschlitz an dem Schlitten festzulegen, so daß diese eine definierte Position relativ zum Schlitten einnimmt. Diese Position kann nach hinten durch einen Steuerstift weiter festgelegt werden, gegen den die Karte beim Einschieben anschlagen kann.

Dieser Steuerstift kann eine Vorstehung aufweisen, die aus einem Kartenführungsbett des Schlittens hervorsteht und eingezogen werden kann, wenn die Karte einzuziehen ist.

Dieser Einziehvorgang der Vorstehung kann dadurch verursacht werden, daß der Steuerstift mit einem Widerhaken ausgebildet ist, der in eine Öffnung des Basisteils gezogen wird, wenn der Schlitten durch eine entsprechende Antriebsbewegung der Antriebseinheit des Wagens um einen vorbestimmten Betrag in die zweite Richtung bewegt wird. Dadurch wird der Widerhaken des Steuerstifts in die Steueröffnung des Basisteils eingezogen, wodurch die Vorstehung eingezogen wird. Anschließend kann der Wagen die Karte über den Mitnehmer nach hinten aus dem Schlitten herausschieben.

Die Klemmelemente können weiterhin derart ausgebildet sein, daß sie im Klemmzustand der Karte auf dieselbe eine Kraft nach hinten gegen die Vorstehung des Steuerstifts ausüben. Somit ist die Karte zwischen den Klemmelementen und der Vorstehung festgeklemmt. Wird nun der Schlitten durch einen Antrieb des Wagens derart nach hinten verschoben, daß sich die Vorstehung des Steuerstifts in das Kartenführungsbett einzieht, so kann die Karte aus der Verklemmung durch die Klemmelemente herausrutschen und wird durch dieselben etwas nach hinten über die eingezogene Vorstehung geschoben. Die Karte ist dann frei in der Kartenführung des Schlittens bewegbar.

Gemäß einer weiteren Ausführungsform kann die Vorrichtung einen mechanischen Kartenauswurfmechanismus mit einem Steuerteil und einem Führungsteil aufweisen.

Der mechanische Kartenauswurfmechanismus ermöglicht es dem Benutzer seine Karte auch bei einem elektrischen oder mechanischen Defekt des Kartenlesers aus demselben herauszuziehen, so daß seine Karte nicht verlorengeht. Dies ist beispielsweise bei Scheckkarten von großer Wichtigkeit, da der Benutzer sonst keine Möglichkeit hat eventuell bei einem anderen EC-Automaten eine erneute Transaktion vorzunehmen.

Weiterhin kann die Vorrichtung ein Verriegelungselement aufweisen, das in einer geeigneten Stellung des Schlittens ein Einschieben der Karte in den Einführungsschlitz erlaubt und in einer Betriebsstellung des Schlittens denselben verriegelt. Dadurch wird der Leser beispielsweise während dem Leserbetrieb vor Manipulationen geschützt.

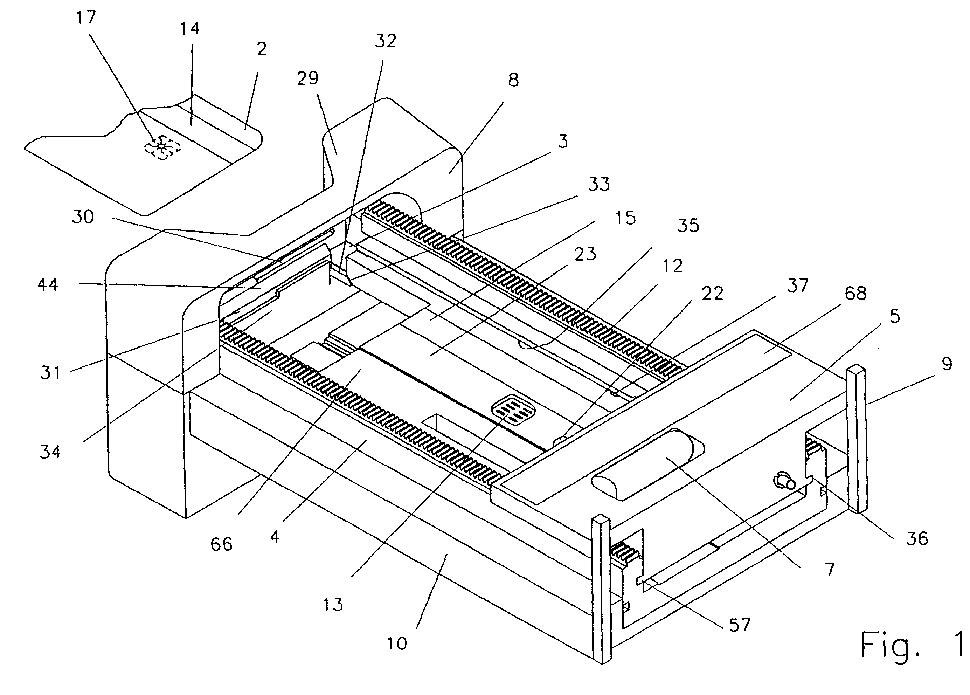

An dieser Stelle sei weiterhin angemerkt, daß der Leser auf dem Kopf stehend betrieben wird, verglichen mit der in der Fig. 1 gezeigten Darstellung. Dadurch können Gegenstände, welche in unbefugter Weise in den Leser eingeschoben werden und nicht exakt in die Kartenführung des Schlittens hineinpassen aus dem Leser herausfallen, was weiterhin die Betriebssicherheit erhöht. Zudem wird ein Karteneinzug dahingehend vereinfacht, daß die Kartenführung im Schlitten beispielsweise nach zwei Dritteln der Schlittenlänge von vorne beginnend endet, so daß die Karte bei einem Einziehvorgang einfach von unten aus der Kartenführung herausfallen kann.

Die multifunktionalen Eigenschaften des Lesers lassen sich entsprechend dem Steuerungsprogramm für die Antriebseinheit leicht und ohne eine mechanische oder konstruktive Veränderung des Lesers einstellen. Der Leser kann somit zum Lesen und/oder Schreiben auf einen Magnetstreifen und/oder einen Chip verwendet werden. Weiterhin ist es möglich, auf dem Schlitten einen Testmagnetstreifen und/oder auf dem Wagen einen Testchip anzuordnen. Dadurch kann der Leser in vorbestimmten Zeitabständen einen Prüfzyklus fahren. Der Leser wird bei einem derartigen Prüfzyklus derart gesteuert, daß der Wagen mit dem Tonkopf über den Testmagnetstreifen fährt und seine Funktion dadurch überprüft. Weiterhin kann der Wagen mit dem daran angeordneten Testchip über dem Chiplesesatz des Schlittens angeordnet werden, um die Funktion der Chiplese- und Schreibvorrichtung zu überprüfen. Dadurch ist es in vorteilhafter Weise möglich, die Betriebsbereitschaft des Lesers jederzeit zu überprüfen, so daß bei einer eventuellen Fehlermeldung der Leser sofort repariert und/oder ausgetauscht werden kann. Es ist weiterhin möglich, diese Überprüfung zu automatisieren, indem man den Überprüfungszyklus von einem Kriterium wie Zeit, Annäherung an den Leser, Fehlbuchung oder ähnlichem abhängig macht. Die Auslesung dieser Überprüfung sowie die Übertragung dieser Fehlermeldung kann beispielsweise über eine Datenleitung von oder zu einer zentralen Überwachungsstelle erfolgen. Damit ist es möglich, die Ausfallzeiten von derartigen Lesevorrichtungen zu minimieren.

Der erfindungsgemäße Multifunktionsleser kann weiterhin, wie oben schon dargestellt wurde, ein Einziehen der Karte durchführen, so daß etwa Scheckkarten bei einer mehrmaligen falschen Eingabe einer Geheimnummer aus Sicherheitsgründen eingezogen werden können, aber auch alle sonstige Anwendungen, bei denen die Karte nach der Nutzung durch den Kunden beim Betreiber bleiben soll, erfüllt werden können.

Zusammenfassend zeichnet sich der erfindungsgemäße Leser durch seine geringe Anzahl von bewegten Teilen aus, was seine Ausfallsicherheit stark erhöht. Weiterhin ist der erfindungsgemäße Leser in allen seinen Teilen aus Kunststoff herstellbar, also spritzbar, was seine Herstellungskosten im Wettbewerb erheblich senkt. Weiterhin kommt der erfindungsgemäße Leser ohne einen Riemenantrieb oder sonstige Gummiteile, wie z.B. Rollen, aus. Dadurch werden negative Einflüsse durch widrige Bedingungen vermieden und die Sabotagesicherheit wird weiter erhöht. Darüber hinaus können die Multifunktionseigenschaften des Lesers bei einer sehr geringen Baugröße realisiert werden. Dies bedeutet, daß eventuell bei einer Nachrüstung von schon bestehenden Lesern mit dem erfindungsgemäßen Leser u.U. anstatt des vorher verwendeten Lesers zwei oder mehr erfindungsgemäße Leser in den Einbauschacht untergebracht werden können. Dadurch könnte eine beliebige Redundanz erzielt werden, da bei einem Ausfall des ersten erfindungsgemäßen Lesers der zweite aktiviert werden könnte, u.s.w.. Dadurch wird die Standzeit solcher Geräte wesentlich erhöht und schnellster Zugriff von z.B. Wachdiensten und/oder Technikern ist gewährleistet.

Weiterhin zeichnet sich der erfindungsgemäße Leser durch einen nach unten offenen und frei einsehbaren Leseschacht aus. Das erhöht die Sabotagesicherheit, weil eindringende Fremdgegenstände oder Flüssigkeiten nach unten herausfallen können und ermöglicht das schnelle Entfernen von z.B. verklemmten Fremdgegenständen.

Das erfindungsgemäße Steuerverfahren kann durch eine Steuereinheit realisiert werden. Diese Steuereinheit kann einen Mikrocomputer enthalten, der durch entsprechende Ein/Ausgabeleitungen analoge und/oder digitale Signale ausgibt, bzw. empfängt. Dadurch kann etwa die Antriebseinheit angesteuert werden und es können Positionssignale des Schlittens und/oder des Wagens entgegengenommen werden. Durch die Steuereinheit können sämtliche Funktionen des Lesers realisiert werden.

In einer Ausgangsstellung des erfindungsgemäßen Lesers befindet sich der Wagen in einer hinteren Stellung und der Schlitten in einer vorderen Stellung derart, daß eine Karte in den Leser eingeschoben werden kann. Beim Einschieben der Karte in die Kartenführung des Schlittens kann dieselbe bis zu der Vorstehung des Steuerstifts geschoben werden, wobei dabei ein Positionsschalter ausgelöst werden kann. Dieser Positionsschalter gibt der Steuereinheit an, daß eine Karte in ihrer Endstellung in den Schlitten eingeschoben wurde. Infolgedessen wird die Antriebseinheit des Wagens derart angesteuert, daß sich der Wagen nach vorne in Richtung auf den vorderen Anschlag zubewegt. Hierbei wird der Tonkopf des Wagens über den Magnetstreifen der Karte bewegt, wodurch ein Lesen bzw. Schreiben erfolgen kann. Nach dem Anschlagen des Wagens an dem vorderen Anschlag wird die Antriebseinheit noch für eine vorbestimmte Zeit in die gleiche Richtung weiterbetrieben, wodurch sich der Schlitten mit der darin durch die Klemmelemente festgelegten Karte um einen vorbestimmen Wegbetrag nach hinten bewegt. Dadurch kann das Verriegelungselement den Einführungsschlitz verschließen und der Tonkopf kann seinen Lesevorgang abschließen, sofern dies nicht schon bei dem vorherigen Schritt erfolgt ist. Die Karte befindet sich nun in dem Leser und kann entweder nochmals gelesen werden oder beschrieben werden. Dazu würde der Wagen nochmals über den entsprechenden Datenstreifen der Karte bewegt werden. Weiterhin ist es nun ebenso möglich, den Chiplesesatz auf eine eventuell an der Karte vorgesehene Chipkarte zu positionieren, um mit einer entsprechenden Chiplese-/Schreibvorrichtung den Chip zu lesen bzw. in den Chip Daten zu schreiben.

Die Chiplese-/Schreibvorrichtung kann einen Chiptastensatz enthalten, der mit dem Datenchip der Karte für einen Schreib- und/oder Lesevorgang in Kontakt kommt. Anstatt des Chiptastensatzes kann auch ein Chiplesesatz eingesetzt werden, der den Chip berührungsfrei liest bzw. beschreibt.

Gemäß einer weiteren Entscheidung durch die Steuereinheit kann die Karte eingezogen werden. Dadurch würde sich der Wagen wieder nach vorne bewegen und mit dem vorderen Anschlag in Kontakt kommen. Die Antriebseinheit des Wagens würde dann weiter in die gleiche Richtung angetrieben werden, so daß sich der Schlitten mit der festgelegten Karte so weit nach hinten bewegt, daß sich der an dem Wagen angeordnete Mitnehmner über die vordere Stirnseite der Karte bewegen würde und daß sich die Vorstehung des Steuerstifts in das Kartenführungsbett einzieht. Dadurch wird die Karte aus ihrer Fixierung in dem Schlitten gelöst. Der Wagen wird anschließend, nachdem der Mitnehmer über die Kartenstirnseite gerastet ist nach hinten bewegt, wodurch die Karte aus der Kartenführung des Schlittens geschoben werden kann. Sobald die Karte aus der Kartenführung gerutscht ist, ist der Einzugsvorgang beendet.

Die Erfindung wird im folgenden beispielshaft anhand von Zeichnungen näher erläutert. Es zeigen:
- Fig. 1: eine perspektivische Ansicht des erfindungsgemäßen Kartenlesers;
- Fig. 2: eine perspektivische Ansicht des Kartenlesers mit eingeschobener Karte;
- Fig. 3: eine perspektivische Ansicht des Schlittens mit einer teilweisen Explosionsdarstellung von zugehörigen Bauteilen;
- Fig. 4: eine teilweise Schnittansicht des Schlittens;
- Fig. 5: eine perspektivische Ansicht des Basisteils;
- Fig. 6: eine teilweise Schnittansicht des Steuerstifts in einer eingezogenen und einer nicht eingezogenen Stellung;
- Fig. 7: eine perspektivische Ansicht des Steuerstifts;
- Fig. 8a-c: Teilansichten und eine Schnittansicht des Wagens und
- Fig. 9: eine Draufsicht von vorne auf den Schlot der Vorrichtung.

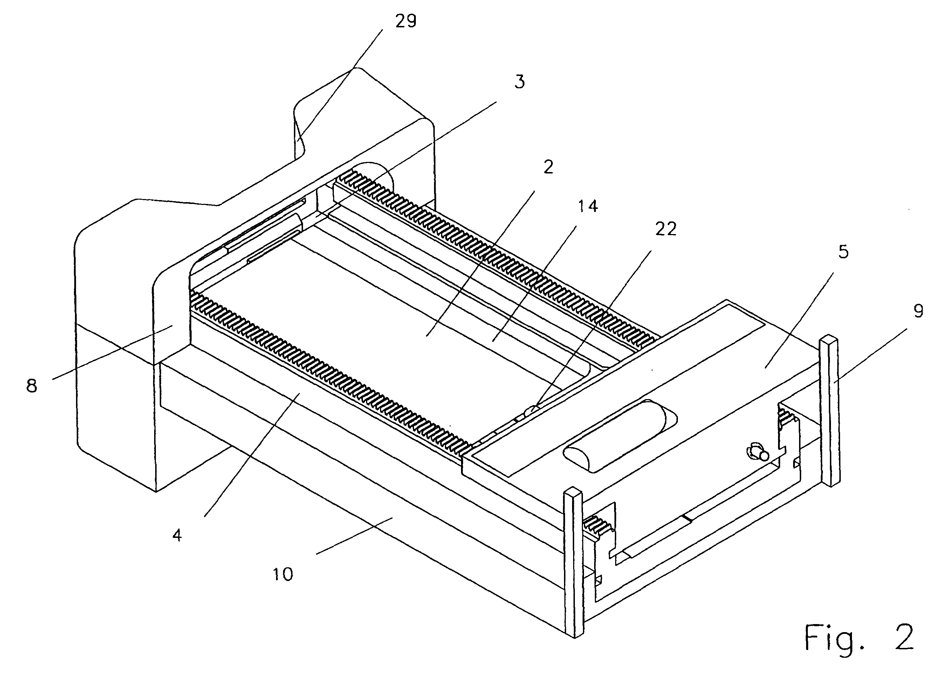

Die Fig. 1 zeigt die erfindungsgemäße Vorrichtung in einer perspektivischen Ansicht, wobei an dieser Stelle angemerkt werden soll, daß die Einbaulage des Lesers zu der in dieser Figur dargestellten vorzugsweise auf den Kopf gestellt ist. Somit zeigt die Fig. 1 (wie auch die Fig. 2 - 9) die erfindungsgemäße Vorrichtung von unten.

In den Kartenleser kann eine Datenkarte 2 eingeführt werden, die einen Magnetstreifen 14 und ein Chipfeld 17 aufweist. Das Chipfeld 17 ist auf der dem Magnetstreifen 14 gegenüberliegenden Seite der Karte 2 angeordnet und daher nur strichlinienförmig dargestellt. Die Datenkarte 2 kann durch einen Einführungsschlitz 30 in den Kartenleser 1 eingeführt werden. Der Einführungsschlitz 30 befindet sich in einem Schlot 29. Dieser Schlot 29 kann etwa bei der Verwendung als Kartenleser für EC-Automaten auf der Benutzerseite angeordnet sein und befindet sich somit im Benutzerbereich.

Wenn ein Schlitten 4, der in einer Führung 3 eines Basisteils 10 verschiebbar angeordnet ist, derart positioniert wird, daß er einen Verriegelungsnocken 32 eines Verriegelungselements 31 nach unten drückt, so kann die Karte 2 durch den Einführungsschlitz 30 in den Kartenleser 1 eingeführt werden.

Befindet sich der Schlitten 4 mit einer Steuerfläche 33 nicht in Kontakt mit dem Verriegelungsnocken 32, so wird das Verriegelungselement 31 über den Einführungsschlitz 30 geschoben, so daß dieser verschlossen ist.

Das Verriegelungselement 31 wird in einer Verriegelungsführung 34 geführt, die eine Führungswand für das Verriegelungselement 31 bilden kann. Die andere Führungswand kann durch die Rückseite der Wand des Einführungsschlitzes 30 gebildet werden. Das Verriegelungselement 31 kann von einer nicht dargestellten Feder nach oben in Richtung auf den Einführungsschlitz zu gedrückt werden, so daß das Verriegelungselement 31 den Einführungsschlitz 30 immer dann verschließt, wenn die Steuerfläche 33 des Schlittens 4 nicht mit dem Verriegelungsnocken 32 des Verriegelungselements 31 in Kontakt kommt. Das Verriegelungselement 31 kann zwei Verriegelungsnocken 32 aufweisen, welche symmetrisch rechts und links angeordnet sein können. Dementsprechend kann der Schlitten 4 ebenso zwei Steuerflächen 33 aufweisen.

Die Darstellung in der Fig. 1 entspricht einer Darstellung der Positionen der Leserbauteile in einem Ausgangszustand, in dem eine Karte eingeführt werden kann. Ein Wagen 5 befindet sich hierbei an einem hinteren Anschlag 9 und der Schlitten 4 ist so weit nach vorne geschoben, daß zum einen die noch später beschriebenen Klemmelemente ein Karteneinschieben erlauben und zum anderen das Verriegelungselement 31 den Einführungsschlitz 30 freigibt. Die Karte 2 kann somit in den Einführungsschlitz 30 eingeschoben werden, wobei der Einführungsschlitz 30 mit einer entsprechenden Kartenaufnahme 35 des Schlittens 4 derart fluchtet, daß die Karte 2 in die Kartenaufnahme 35 ohne ein Verklemmen geschoben werden kann (siehe auch Fig. 2).

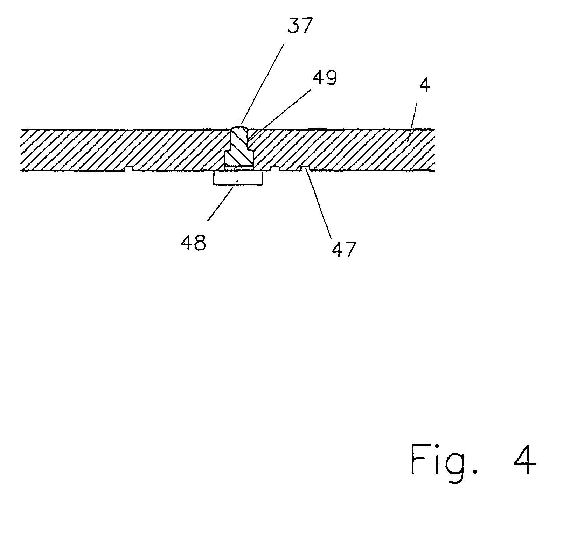

In der in der Fig. 1 dargestellten Bauteilstellung kann die Karte durch den Benutzer bis zu einer Vorstehung 22 in den Kartenleser 1 eingeschoben werden, wobei die Karte bei Erreichen der Anschlagsstellung gegen die Vorstehung einen Steuerstift 37 betätigt, welcher wiederum einen Schalter (wird noch dargestellt - Fig. 4) betätigen kann, der mit einer Steuereinheit für den Kartenleser 1 verbunden ist und eine Beendigung des Einschiebevorgangs der Karte 2 anzeigt.

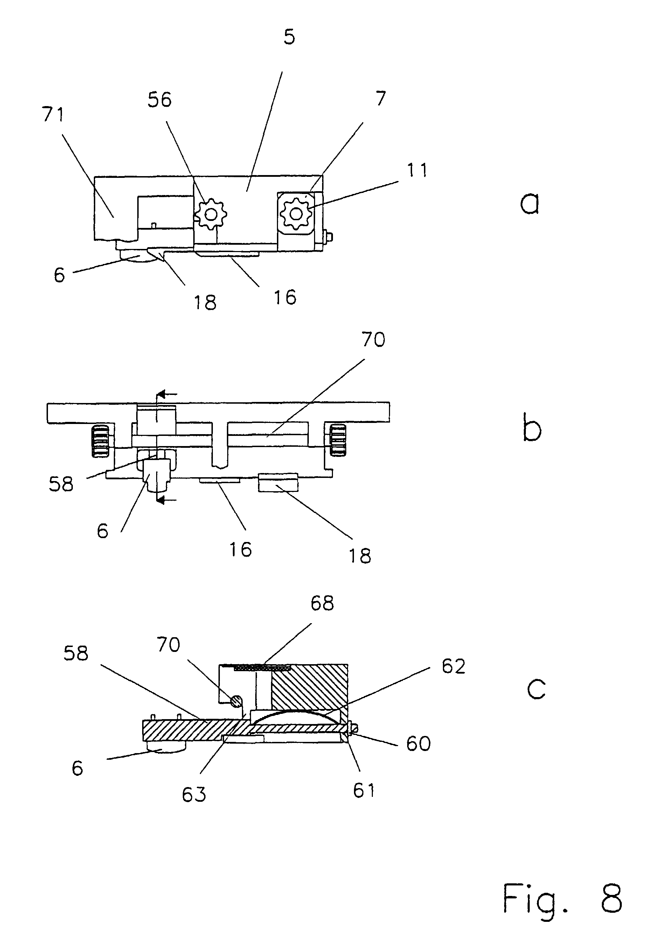

Der Schlitten 4 weist ein Kartenführungsbett 23 auf. Auf diesem Kartenführungsbett 23 ist ein Testmagnetstreifen 15 angeordnet, der von einer noch darzustellenden Schreib-/Leseeinheit 6 kontaktiert werden kann. In dem Schlitten 4 ist weiterhin eine Führungsaufnahme 67 vorgesehen, die eine Schreib-/Leseeinheit 13 für das Chipfeld 17 der Karte 2 aufnimmt. Diese Schreib-/Leseeinheit 13 enthält einen Chiptastensatz, der in der Führungsaufnahme 67 nach oben in der Fig. 1 bewegt werden kann, um mit dem Chipfeld 17 in Kontakt zu kommen. Weiterhin kann der Chiptastensatz mit einem Testchip 16 in Kontakt gebracht werden, der am Wagen 5 angeordnet ist (vgl. Fig. 8).

Der Schlitten 4 weist einen U-förmigen Querschnitt auf, wobei dessen Schenkel endseitig eine Verzahnung 12 aufweisen. In die Verzahnung 12 kann ein ebenfalls später dargestelltes Antriebszahnrad 11 eingreifen, um eine Relativbewegung zwischen dem Wagen 5 und dem Schlitten 4 zu verursachen; wodurch ebenso eine Relativbewegung dieser beiden Teile zu dem Basisteil 10 stattfinden kann.

Das Basisteil 10 ist in seinem Querschnitt ebenfalls U-förmig ausgebildet und nimmt den Schlitten 4 verschiebbar auf.

Der Wagen 5 weist eine Antriebseinheit 7 auf, welche das Antriebszahnrad 11 antreibt und ist mit einer Zentralplatine 68 versehen, die beispielsweise elektrische Verbinder für die Antriebseinheit 7 aufnimmt.

Die Fig. 2 zeigt die Vorrichtung mit einer eingeschobenen Karte 2. Die Karte 2 wird in einer Kartenaufnahme 35 geführt und stößt beim Einschieben gegen eine Vorstehung 22. Die Vorstehung 22 bildet einen Endanschlag für die Karte 2. Die Karte 2 wird in dem Schlitten 4 somit über den Endanschlag und noch dargestellte Klemmelemente 19 fixiert.

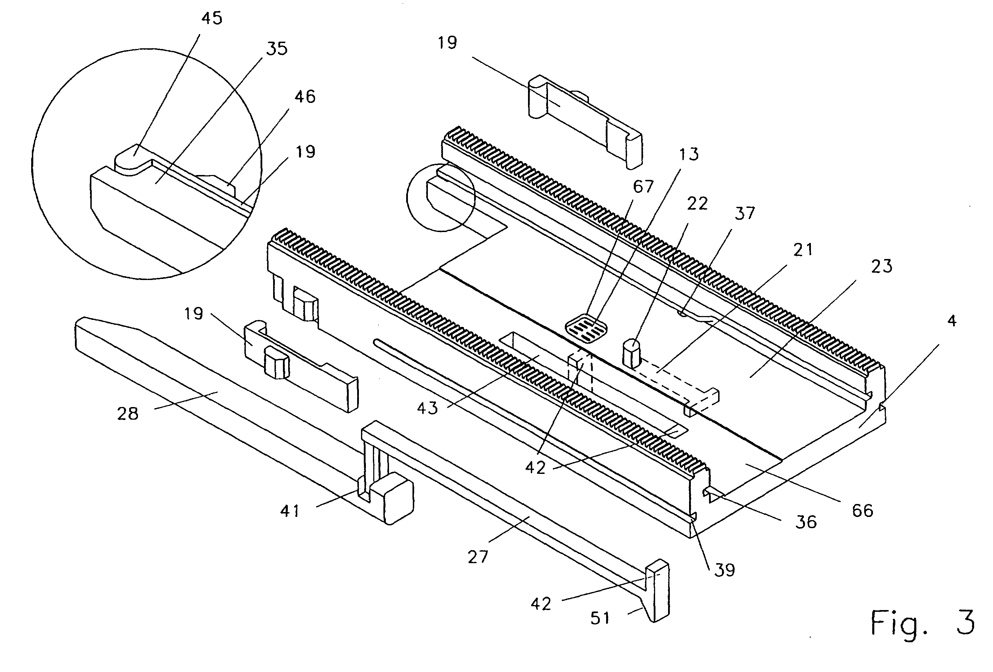

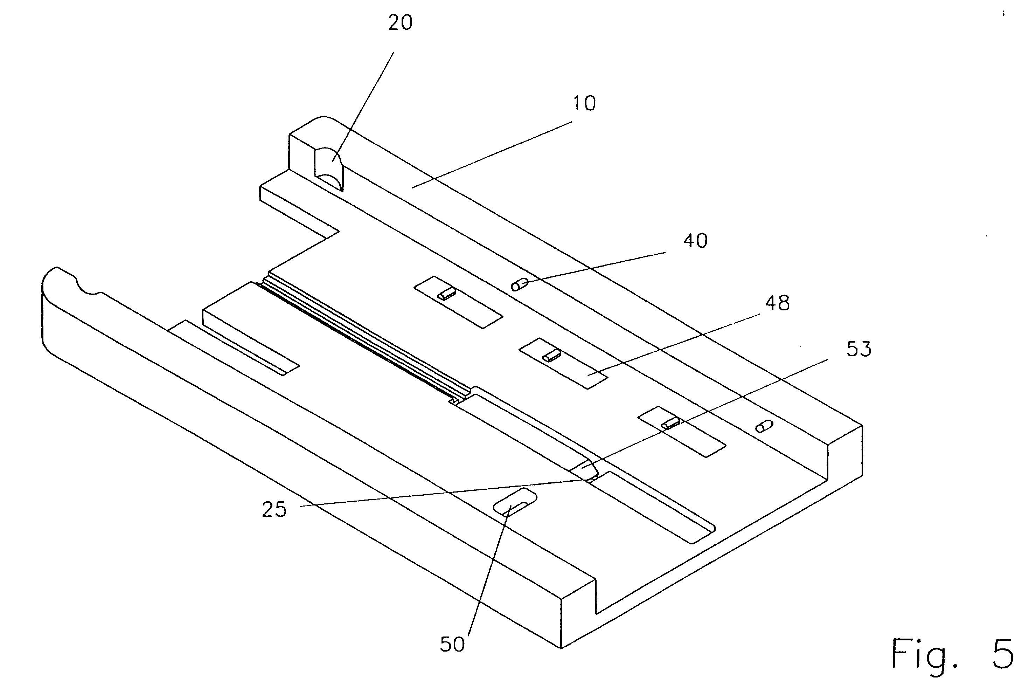

Die Fig. 3 zeigt den Schlitten 4 in einem ausgebauten Zustand. Der Schlitten 4 weist auf seinen Außenseiten jeweils eine Schlittenführungsnut 39 auf. In die Schlittenführungsnut 39 können in der Fig. 5 dargestellte Führungsstifte 40 des Basisteils 10 eingreifen. Die Bewegung des Schlittens 4 im Basisteil 10 nach hinten ist durch die Länge der Schlittenführungsnut 39 begrenzt.

An dem Schlitten 4 angeordnet ist ein Steuerstift 21 dargestellt, dessen Vorstehung 22 aus dem Kartenführungsbett 23 nach oben vorsteht (in Einbaulage würde die Vorstehung 22 nach unten vorstehen). Der Chiptastensatz 13 befindet sich in der Führungsaufnahme 67. In der Fig. 3 ist der Testmagnetstreifen 15 nicht dargestellt.

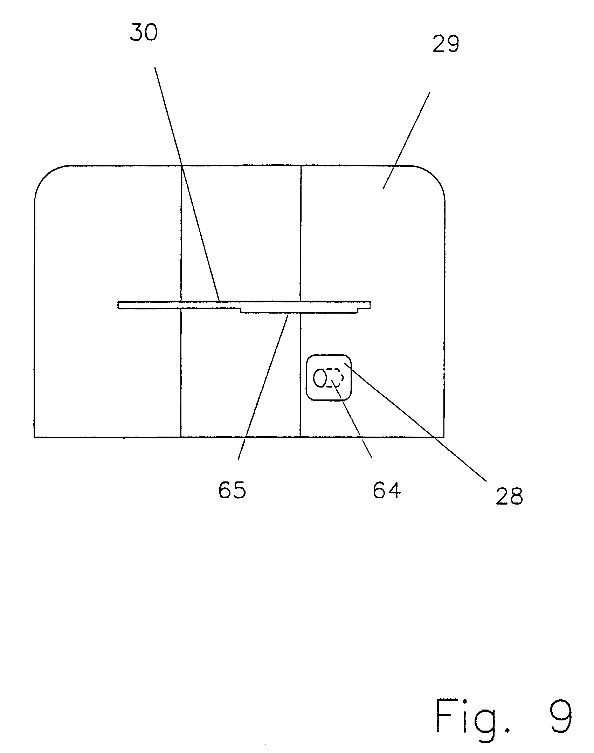

In der Fig. 3 ist weiterhin in einer explosionsartigen Darstellung ein Kartenauswurfmechanismus 26 gezeigt. Der Kartenauswurfmechanismus 26 besteht aus einem Steuerteil 27 und einem Führungsteil 28. Das Führungsteil 28 endet in einem Benutzerzugriffsbereich im Schlot 29 und weist eine in Fig. 9 dargestellte Auswertbohrung 64 zum Einführen eines spitzen Gegenstands (beispielsweise eines Kugelschreibers) auf, um das Führungsteil 28 nach vorne zu ziehen. Dadurch wird das Steuerteil 27 über eine Aufnahme 41 mitgenommen. Das Steuerteil 27 ist in seiner hinteren Ausgangsstellung bündig mit dem Kartenführungsbett 23. Wird nun das Führungsteil 28 nach vorne (in der Fig. 3 links oben) gezogen, so ragt das Steuerteil 27 über einen Schiebestift 42 in das Kartenführungsbett 23, wobei der Schiebestift 42 in einem Kartenauswurflangloch 43 nach vorne bewegt wird (Strichlinie). Dadurch wird eine dann an dem Schiebestift 42 anstehende Karte 2 (nicht dargestellt) mitgenommen und durch den Einführungsschlitz 30 nach außen geschoben. Dies kann in jeder Stellung des Schlittens 4 und damit des Verriegelungselements 31 erfolgen, da das Verriegelungselement 31 an seiner Innenseite eine Abschrägung 44 aufweist, welche auf das Verriegelungselement 31 eine Kraft nach unten entgegen der schon erwähnten Feder ausübt, wenn die Karte 2 von innen nach außen gegen die Abschrägung 44 gedrückt wird.

Die Fig. 3 zeigt weiterhin Klemmelemente 19, die rechts und links an dem Schlitten 4 angeordnet sind. Wie in der vergrößerten Detailansicht der Fig. 3 (durch einen Kreis gekennzeichnet) dargestellt ist, stehen die Klemmbacken 45 im eingerückten Zustand in die Kartenaufnahme 35. Das Klemmelement 19 weist weiterhin eine Steuervorstehung 46 auf, die bei einem eingesetzten Klemmelement 19 aus der Seitenfläche des Schlittens 4 heraussteht. Wird der Schlitten 4 in das Basisteil 10 eingesetzt, so werden die Steuervorstehungen 46 durch die Führungsfläche des Basisteils 10 nach innen gedrückt. Dadurch wird wiederum der Klemmbacken in die Kartenaufnahme 35 gedrückt. Die Abmessungen für den Abstand der Klemmbacken 45 zu der Vorstehung 22 sind derart gewählt, daß eine an der Vorstehung 22 anstehende Datenkarte im festgeklemmten Zustand an der der Vorstehung 22 zugewandten Seite des Klemmbackens 45 festgeklemmt wird. Dadurch übt der Klemmbacken 45 eine Kraft nicht nur in Querrichtung auf die eingeschobene Karte aus, sondern auch in Längsrichtung auf die Vorstehung 22 zu. Wird nun die Vorstehung 22 eingezogen, so wird die Karte 2 aus der Verklemmung durch die Klemmbacken 45 nach hinten im Schlitten 4 gedrückt. Der Karte 2 wird damit durch die Klemmbacken 45 eine leichte Anfangsbewegung nach hinten mitgegeben. Die Steuervorstehung 46 kann in noch dargestellte Vertiefungen 20 in das Basisteil 10 eingreifen. Dadurch bewegen sich die Klemmbacken 45 der Klemmelemente 19 nach außen und die Kartenaufnahme wird für die Karte 2 durchgängig. Somit kann die Karte 2 aus dem Schlitten 4 herausgezogen oder in denselben eingeschoben werden.

In der Fig. 4 ist der Schlitten 4 in einer teilweise geschnittenen Ansicht dargestellt. Der Teilschnitt führt durch den Bereich des Schlittens 4, der über Schaltern 48 liegt, welche auch in Fig. 5 dargestellt sind. Weiterhin ist der Schaltstift 37 dargestellt, welcher auch in den Fig. 1 und 2 zu sehen ist. Dieser Schaltstift 37 wird durch die Karte 2 nach unten gedrückt, wenn sie sich in ihrer Endstellung in Anschlag mit der Vorstehung 22 befindet. Wenn sich der Schlitten 4 in der Ausgangsstellung befindet, so ist unter dem Schaltstift 37 ein Schalter 48 angeordnet (wie dargestellt). Wird nun die Karte 2 in den Schlitten 4 eingeführt, so wird der Schaltstift 37 nach unten gedrückt und betätigt wiederum den Schalter 48. Der Schaltstift 37 läuft in einer Bohrung 49 des Schlittens 4. Der Schlitten 4 weist weiterhin an geeigneten Stellen Schaltnuten 47 auf, die mit entsprechenden Schaltern 48 (nicht dargestellt) derart in Kontakt kommen können, daß der entsprechende Schalter 48 bzw. dessen Schaltelement, gedrückt wird, wenn sich die Schaltnut 47 nicht über dessen Schaltfläche befindet.

Hierbei sind die Schalter 48 und die Schaltnuten 47 derart an dem Schlitten 4 und dem Basisteil 10 angeordnet, daß sämtliche Multifunktionseigenschaften des Kartenlesers 1 realisiert werden können.

Die Fig. 5 zeigt das Basisteil 10 ohne den eingesetzten Schlitten 4. Das Basisteil 10 weist die Schaltelemente 48 auf, welche, wie oben beschrieben, mit entsprechenden Schaltnuten des Schlittens 4 in Kontakt treten können. Die Schalter 48 sind wiederum elektrisch mit einer nicht dargestellten Steuereinheit verbunden, so daß die Steuereinheit über die Position des Schlittens 4 relativ zum Basisteil 10 informiert ist. Das Basisteil 10 weist die Vertiefungen 20 auf, in welche die Steuervorstehungen 46 der Klemmelemente 19 eingreifen können, um die Kartenführung 35 für ein Ein- bzw. Ausschieben der Karte 2 freizugeben.

Das Basisteil 10 weist weiterhin die Führungsstifte 40 auf, welche in die Schlittenführungsnut 39 eingreifen.

In dem Basisteil 10 ist eine Hebeöffnung 50 vorgesehen. Diese Hebeöffnung 50 nimmt im nicht gezogenen Zustand des Kartenauswurfmechanismus eine Anhebeschräge 51 des Steuerteils 27 auf (Fig. 3). Damit ist der Schiebestift 42 in dieser Stellung bündig mit dem Kartenführungsbett 23 angeordnet. Sobald an dem Führungsteil 28 gezogen wird, kommt die Anhebeschräge 51 mit dem vorderen Rand der Hebeöffnung 50 des Basisteils 10 in Kontakt. Die von außen zugeführte Zugkraft resultiert nun zum einen in einer Bewegung des Steuerteils 27 nach vorne und zum anderen in einer Anhebung des Schiebestifts 42 in das Kartenführungsbett 23 (in der Fig. 3 ist der Schiebestift 42 in seiner angehobenen Position gestrichelt dargestellt). Der Schiebestift 42 gleitet dann mit seiner Unterkante bei einer weiteren Zugbewegung des Kartenauswurfmechanismus 26 über die entsprechende Innenfläche des Basisteilbetts, wodurch die Vorstehung weiter aus dem Kartenführungsbett 23 vorsteht. Dadurch kann die Karte 2 aus dem Einführungsschlitz 30 des Kartenlesers 1 ausgeschoben werden.

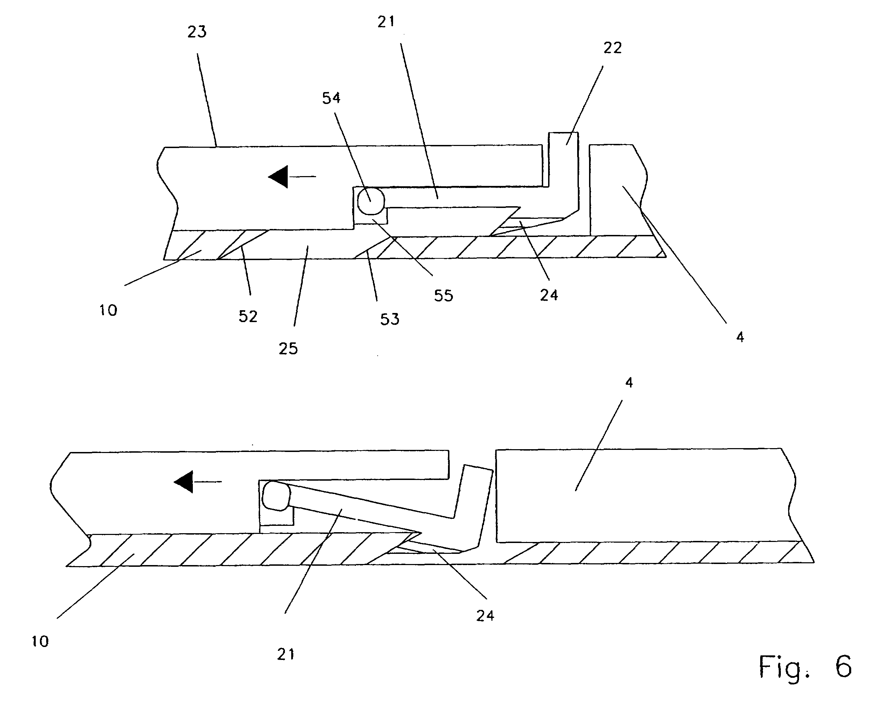

Die Fig. 6 zeigt eine teilweise geschnittene Ansicht des Basisteils 10 mit dem Steuerstift 21. Wie schon vorangehend erläutert, weist der Steuerstift 21 eine Vorstehung 22 auf, gegen die die Karte 2 beim Einschieben ansteht. Um nun einen Karteneinzugsvorgang zu realisieren, muß diese Vorstehung 22 in das Kartenführungsbett 23 eingezogen werden können. Dies erfolgt dadurch, daß der Schlitten 4 nach hinten bewegt wird (in der Fig. 6 nach links). Dadurch verfährt ein Widerhaken des Steuerstifts auf einer Verfahrfläche 69 des Basisteils 10, bis eine Einzugsschräge 52 einer Steueröffnung 25 erreicht ist. Der Widerhaken 24 wird durch die Einzugsschräge 52 in die Steueröffnung 25 hineingezogen, wenn sich der Wagen 4 nach hinten relativ zum Basisteil 10 bewegt. Die Oberkante der Einzugsschräge 52 ist höher als die Verfahrfläche 69, so daß der Widerhaken 24 bei der entsprechenden Bewegung des Wagens 4 nach hinten an die Einzugsschräge 52 anschlägt und in die Steueröffnung 25 gezogen wird. Dadurch ist die Vorstehung 22 eingezogen. Wird nun der Wagen 4 in die andere Richtung bewegt, so wird der Widerhaken 24 mit seiner Vorderfläche gegen eine Ausdrückschräge 53 der Steueröffnung 25 gedrückt, so daß sich der Steuerstift 21 wieder nach oben bewegt, wodurch die Vorstehung 22 wieder in das Kartenführungsbett 23 vorsteht.

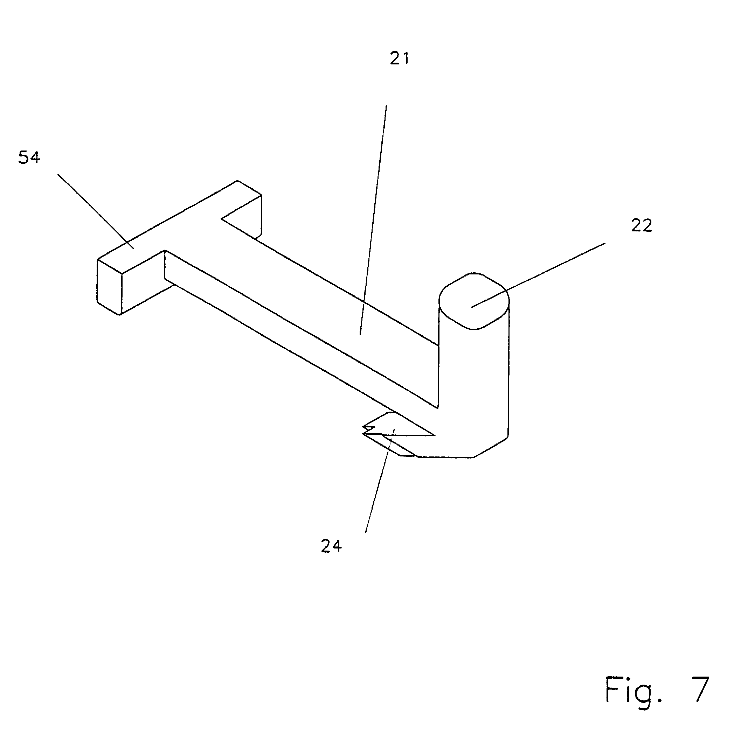

Die Fig. 7 zeigt eine vergrößerte Darstellung des Steuerstifts mit der Vorstehung 22 und dem Widerhaken 24. Ein T-Stück 54 kommt hierbei derart in dem Schlitten 4 in einer Aufnahme 55 zu liegen, daß sich der Steuerstift nach unten bewegen kann, sofern er in die Steueröffnung 25 eingreift.

Die Fig. 8a-c zeigen Draufsichten (a und b) und eine teilweise Schnittansicht (c) des Wagens mit der Antriebseinheit 7 und der Schreib-/Leseeinheit 6 und dem Testchip 16.

In der Darstellung a ist der Wagen 5 von der Seite in einer Draufsicht dargestellt. Die Antriebseinheit 7 weist das Antriebszahnrad 11 auf, welches aus der Darstellung a aus der Zeichenebene vorsteht. Die Antriebseinheit 7 ist derart in den Wagen 5 eingesetzt, daß sie verdrehsicher angeordnet ist. Weiterhin weist der Wagen 5 ein Führungszahnrad 56 auf, welches ebenso in die Verzahnung des Wagens 5 eingreifen kann. Hierbei können zwei Führungszahnräder 56 vorgesehen sein, die mit einer Welle 70 verbunden sind. Die Welle 70 kann in Aufnahmen des Wagens 5 eingelegt werden, wobei dann der Wagen 5 für einen Einbau mit einer Verfahrkante 57 in die Wagenführungsnut 36 eingesetzt wird, wobei dann die Führungszahnräder 56 in der Verzahnung 12 des Wagens 4 laufen. Wird der Wagen 5 weiter in den Schlitten 4 geschoben, so kommt anschließend das Antriebszahnrad 11 in Kontakt mit der Verzahnung 12. Der Wagen 5 ist somit verfahrbar auf dem Schlitten 4 angeordnet.

Der Wagen 5 weist weiterhin den Tonkopf 6 und den Testchip 16 auf, welche an der Unterseite des Wagens angeordnet sind und mit entsprechenden Datenfeldern der Karte 2 bzw. mit dem Chiptastensatz in Kontakt kommen können. An der Unterseite des Wagens 5 ist weiterhin der Mitnehmer 18 angeordnet, welcher mit der vorderen Stirnseite der Karte 2 in Kontakt treten kann, um diese einzuziehen.

Der Tonkopf 6 ist in dem Wagen pendelnd gelagert. Der Tonkopf 6 ist hierzu mit einer Tonkopfhalterung 58 verbunden, die an dem vom Tonkopf 6 entfernten Ende einen Lagerungsstift 59 aufweist. Dieser Lagerungsstift 59 ist in einer Durchgangsbohrung 61 angeordnet, wobei der Lagerungsstift 59 mit einem Sprengring 60 in der Bohrung gehalten wird. Der Lagerungsstift 59 ist weiterhin in einem Langloch 63 geführt, wobei der Tonkopf 6 nach unten durch eine Feder 62 gedrückt wird. Dadurch kann der Tonkopf 6 pendelnd gelagert und stets in einem guten Kontakt zur Datenkarte 2 gehalten werden, wodurch das zuverlässige Lesen und Schreiben auch von leicht verformten Datenkarten 2 möglich wird.

Weiterhin ist ein Kartenniederhalter 71 schematisch und gebrochen dargestellt. Der Kartenniederhalter 71 ist an seinem der Karte gegenüberliegenden Ende abgerundet ausgebildet und weist eine derartige Länge auf, daß die Karte 2 in das Kartenführungsbett 23 gedrückt werden kann, wenn der Wagen 5 über die Karte 2 fährt.

Die Fig. 9 zeigt eine Draufsicht auf den Schlot 29 mit dem Einführungsschlitz 30 und dem Führungsteil 28 des Kartenauswurfmechanismus. Das Führungsteil 28 weist die Auswurfbohrung 64 auf, in die ein spitzer Gegenstand eingesteckt werden kann. Dadurch ist es möglich, den Kartenauswurfmechanismus mechanisch zu betätigen, auch wenn die Elektronik bzw. Elektrik des Datenlesers ausgefallen ist oder wenn dessen Mechanik blockiert.

Weiterhin zeigt die Draufsicht auf den Schlot 29 eine Vertiefung 65, welche im Einführschlitz 30 ausgebildet ist. Die Vertiefung 65 dient zur berührungsfreien Aufnahme der ausgestanzten Buchstaben der Datenkarten. Wie beispielsweise in der Fig. 1 dargestellt ist, weist der Schlitten 4 ebenso eine solche Vertiefung 66 auf. Damit kann die Karte 2 ohne einen mechanischen Kontakt und insbesondere ohne eine Abnutzung des ausgestanzten Buchstaben- bzw. Zeichenfelds der Datenkarte in dem Kartenleser bewegt werden.

## Patentansprüche

1. Lese- und/oder Schreibvorrichtung für Daten enthaltende Karten, mit
- einer Führung (3), in der verschiebbar ein Schlitten (4) zur Aufnahme einer Karte (2) angeordnet ist,
- einem Wagen (5), der verschiebbar direkt mit dem Schlitten (4) verbunden ist,
- einer Lese-/Schreibeinheit (6, 13) und
- einer Antriebseinheit (7) für eine Relativbewegung zwischen dem Wagen (5) und dem Schlitten (4), wobei
- die Karte (2) am Schlitten (4) festgelegt ist und mit dem Schlitten (4) bewegt wird,
dadurch gekennzeichnet, daß
der Wagen (5) und der Schlitten (4) parallel zueinander verschiebbar sind und die Antriebseinheit (7) bei einem an einem Anschlag (8, 9) feststehenden Wagen (5) eine Relativbewegung zwischen dem Schlitten (4) und der Führung (3) verursacht.

2. Vorrichtung nach Anspruch 1,
dadurch gekennzeichnet, daß
die Antriebseinheit (7) am Wagen (5) vorgesehen ist.

3. Vorrichtung nach Anspruch 1 oder 2,
dadurch gekennzeichnet, daß
die Führung (3) in einem Basisteil (10) vorgesehen ist.

4. Vorrichtung nach zumindest einem der Ansprüche 1 bis 3,
dadurch gekennzeichnet, daß
der Anschlag (8, 9) aus einem vorderen Anschlag (8) und einem hinteren Anschlag (9) gebildet ist, die mit dem Basisteil (10) verbunden sind.

5. Vorrichtung nach zumindest einem der Ansprüche 1 bis 4,
dadurch gekennzeichnet, daß
die Antriebseinheit (7) des Wagens (5) ein Antriebszahnrad (11) aufweist, das in eine Verzahnung (12) des Schlittens (4) eingreift.

6. Vorrichtung nach zumindest einem der Ansprüche 1 bis 5,
dadurch gekennzeichnet, daß
die Lese-/Schreibeinheit (6, 13) einen Tonkopf (6) aufweist, der mit einem Magnetstreifen (14) der Karte (2) und/oder einem an dem Schlitten (4) angeordneten Testmagnetstreifen (15) in Kontakt gebracht werden kann.

7. Vorrichtung nach zumindest einem der Ansprüche 1 bis 6,
dadurch gekennzeichnet, daß
der Schlitten (4) einen Chiptastensatz (16) aufweist, der mit einem Datenchip (17) der Karte (2) und/oder einem an dem Wagen (5) angeordneten Testchip (16) in Kontakt gebracht werden kann.

8. Vorrichtung nach einem der Ansprüche 1 bis 7,
dadurch gekennzeichnet, daß
der Chiptastensatz (16) in einer Lesestellung der Karte (2) nach oben aus einem Kartenführungsbett (23) bewegt wird.

9. Vorrichtung nach einem der Ansprüche 1 bis 8,
dadurch gekennzeichnet, daß
der Wagen (5) einen Mitnehmer (18) aufweist, der mit einer Stirnseite der Karte (2) in Eingriff treten kann, um die Karte (2) einzuziehen.

10. Vorrichtung nach einem der Ansprüche 1 bis 9,
dadurch gekennzeichnet, daß
der Schlitten (4) Klemmelemente (19) aufweist, die in Vertiefungen (20) des Basisteils (10) einrasten können, und die Klemmelemente (19) derart ausgebildet sind, daß sie mit der Karte (2) in eine Wirkverbindung treten, wenn die Klemmelemente (19) nicht in die Vertiefungen (20) eingerastet sind.

11. Vorrichtung nach einem der Ansprüche 1 bis 10,
dadurch gekennzeichnet, daß
der Schlitten (4) einen Steuerstift (21) mit einer Vorstehung (22) aufweist, die aus dem Kartenführungsbett (23) des Schlittens (4) hervorsteht, wenn die Karte (2) relativ zum Schlitten (4) festgelegt ist und beim Einziehen der Karte (2) eingezogen wird.

12. Vorrichtung nach einem der Ansprüche 1 bis 11,
dadurch gekennzeichnet, daß
der Steuerstift (21) einen Widerhaken (24) aufweist, der zum Einziehen der Vorstehung (22) in eine Steueröffnung (25) des Basisteils (10) gezogen wird.

13. Vorrichtung nach einem der Ansprüche 1 bis 12,
dadurch gekennzeichnet, daß
die Vorrichtung einen mechanischen Kartenauswurfmechanismus (26) mit einem Steuerteil (27) und einem Führungsteil (28) aufweist.

14. Vorrichtung nach einem der Ansprüche 1 bis 13,
dadurch gekennzeichnet, daß
die Vorrichtung einen Schlot (29) aufweist, der mit dem Basisteil (10) in Verbindung steht und ein gezieltes Einschieben und Ausgeben der Karte (2) über einen im Schlot (29) angeordneten Einführungsschlitz (30) erlaubt.

15. Vorrichtung nach einem der Ansprüche 1 bis 14,
dadurch gekennzeichnet, daß
der Schlot (29) ein Verriegelungselement (31) aufweist, das in einer geeigneten Stellung des Schlittens (4) ein Einschieben der Karte (2) in den Schlitz (30) erlaubt und den Schlitz (30) in einer anderen Betriebsstellung des Schlittens (4) verriegelt.

16. Vorrichtung nach einem der Ansprüche 1 bis 15,
dadurch gekennzeichnet, daß
der Schlitten (4) relativ zum Basisteil (10) festgelegt ist.

17. Vorrichtung nach einem der Ansprüche 1 bis 15,
dadurch gekennzeichnet, daß
der Wagen (5) relativ zum Basisteil (10) festgelegt ist.

18. Verfahren zum Steuern einer Lese- und/oder Schreibvorrichtung für Daten enthaltende Karten mit den folgenden Schritten:
(A) Bewegen eines mit einem Schlitten (4) direkt verbundenen Wagens (5) in eine erste Richtung über die in den Schlitten (4) eingeschobene und an diesem festgelegte Karte (2), bis der Wagen (5) mit einem ersten Anschlag (8). in Kontakt kommt,
(B) Bewegen des Schlittens (4) in eine zur ersten Richtung entgegengesetzte zweite Richtung, wodurch die Karte (2) aus einem Benutzerzugriffsbereich entfernt und fixiert wird, wobei eine Lese-/Schreibeinheit (6, 13) zu vorbestimmten Zeiten während der Schritte (A) und (B) einen Lese- und/oder Schreibvorgang durchführt,
(C) Bewegen des Wagens (5) in die zweite Richtung, bis der Wagen (5) mit einem zweiten Anschlag (9) in Kontakt kommt, und
(D) Bewegen des Schlittens (4) in die erste Richtung, bis die Karte (2) im Benutzerzugriffsbereich ist,
wobei für eine Relativbewegung zwischen dem Wagen (5) und dem Schlitten (4) eine Antriebseinheit (7) eine Bewegung des Schlittens (4) bei einem an einem von den Anschlägen (9, 13) feststehenden Wagen (5) verursacht.

19. Verfahren nach Anspruch 18,
dadurch gekennzeichnet, daß
der Wagen (5) für einen Karteneinziehvorgang in die erste Richtung bis zum ersten Anschlag (8) bewegt wird, der Wagen (5) weiter in die gleiche Richtung angetrieben wird, wodurch der Schlitten (4) mit der festgelegten Karte (2) in die zweite Richtung bewegt wird, bis ein Mitnehmer (18) des Wagens (5) über die Kartenstirnseite bewegt wird, wobei durch die Bewegung des Schlittens (4) eine Vorstehung (22) im Kartenführungsbett (23) eingezogen wird, und der Wagen (5) in die zweite Richtung bewegt wird, wodurch die Karte (2) durch den Mitnehmer (18) über die eingezogene Vorstehung (22) aus dem Schlitten (4) geschoben wird.

## Claims

1. Reading and/or writing device for cards including data, comprising
- a guiding (3) in which a slide (4) for receiving the card (2) is arranged in a displaceable manner,
- a carriage (5) which is directly linked with the slide (4) in a displaceable manner,
- a reading/writing unit (6, 13) and
- a driving unit (7) for causing a relative movement between the carriage (5) and the slide (4), wherein
- the card (2) is engaged and movable with the slide (4),
characterized in that
the carriage (5) and the slide (4) are movable parallel to each other and the driving unit (7) causes a relative movement between the slide (4) and the guiding (3) when the carriage (5) abuts against a stopper (8, 9).

2. Device according to claim 1,
characterized in that
the drive unit (7) is provided on the carriage (5).

3. Device according to claim 1 or 2,
characterized in that
the guide (3) is provided in a base portion (10).

4. Device according to at least one of the claims 1 to 3,
characterized in that
the stopper (8, 9) comprises a front stopper (8) and a rear stopper (9) which are connected with the base portion (10) .

5. Device according to at least one of the claims 1 to 4,
characterized in that
the drive unit (7) of the carriage (5) comprises a driving tooth gear (11) engaging with a tooth arrangement (12) of the slide (4).

6. Device according to at least one of the claims 1 to 5,
characterized in that
the reading/writing unit (6, 13) comprises a magnetic head (6) which is able to be brought in contact with a magnetic strip (14) of the card (2) and/or with a test magnetic strip (15) arranged on the slide (4).

7. Device according to at least one of the claims 1 to 6,
characterized in that
the slide (4) comprises a chip key set (16) which is able to be brought in contact with a data chip (17) of the card (2) and/or with a test chip (16) arranged on the carriage (5) .

8. Device according to at least one of the claims 1 to 7,
characterized in that
the chip key set (16) is moved upward out of a card guiding bed (23) when the card (2) is arranged in a reading position.

9. Device according to at least one of the claims 1 to 8,
characterized in that
the carriage (5) comprises a catch (18) which is able to engage with a front side of the card (2) in order to pull-in the card (2).

10. Device according to at least one of the claims 1 to 9,
characterized in that
the slide (4) comprises clamping members (19) which are able to lock in indentations (20) of the base portion (10) and which are formed such that they can be operatively connected to the card (2) if they are not locked in the indentations (20).

11. Device according to at least one of the claims 1 to 10,
characterized in that
the slide (4) comprises a control pin (21) with a projection (22) projecting from the card guiding bed (23) of the slide (4) when the card (2) is fixed with relative to the slide (4), and is retracted when the card (2) is pulled in.

12. Device according to at least one of the claims 1 to 11,
characterized in that
the control pin (21) comprises a barb (24), which is pulled in a control aperture (25) of the base portion (10), in order to retract the projection (22).

13. Device according to at least one of the claims 1 to 12,
characterized in that
the device is provided with a mechanical card ejecting mechanism (26) including a control portion (27) and a guiding portion (28).

14. Device according to at least one of the claims 1 to 13,
characterized in that
the device is provided with a panel (29) connected to the base portion (10) and allowing a defined insertion and a defined delivering of the card (2) through an inserting slot (30) arranged in the panel (29).

15. Device according to at least one of the claims 1 to 14,
characterized in that
the panel (29) comprises a locking member (31) which in a suitable position of the slide (4) allows an insertion of the card (2) into the slot (30) and which in another operating position of the slide (4) closes the slot (30).

16. Device according to at least one of the claims 1 to 15,
characterized in that
the slide (4) is fixed with respect to the base portion (10).

17. Device according to at least one of the claims 1 to 15,
characterized in that
the carriage (5) is fixed with respect to the base portion (10).

18. Method for controlling a reading and/or writing device for cards including data, comprising the following steps:
(A) moving a carriage (5) directly linked with a slide (4) in a first direction across a card (2) inserted into and engaged with the slide (4) until the carriage (5) abuts against a first stopper (8),
(B) moving the slide (4) in a second direction opposite to said first direction, in order to take the card (2) away from a user access range and to fixing it, wherein a reading/writing unit (6, 13) performs a reading and/or writing operation at predetermined times during the steps (A) and (B),
(C) moving the carriage (5) in said second direction, until the carriage (5) abuts against a second stopper (9), and
(D) moving the slide (4) in said first direction until the card (2) is in the user access range,
wherein a driving unit (7) causes a movement of the slide (4) when the carriage (5) abuts against one of the stoppers (9, 13) for a relative movement between the carriage (5) and the slide (4).

19. Method according to claim 18,
characterized in that
for a card pull-in operation the carriage (5) is moved in the first direction up to the first stopper (8), then the carriage (5) is continued to be driven in the same direction, by what means the slide (4) with the card (2) fixed thereon is moved in said second direction until a catch (18) of the carriage (5) is moved over the front side of the card, wherein by the movement of the slide (4) a projection (22) in the card guiding bed (23) is retracted, and the carriage (5) is moved in said second direction, by what means the card (2) is pushed by the catch (18) from the slide (4) across the retracted projection (22).

## Revendications

1. Dispositif de lecture et/ou d'écriture pour des cartes contenant des données, comprenant
- un guidage (3) dans lequel est situé un coulisseau déplaçable (4) destiné à recevoir une carte (2),
- un chariot (5) qui est directement relié de manière déplaçable au coulisseau (4),
- une unité de lecture/d'écriture (6, 13) et
- une unité d'entraînement (7) pour causer un mouvement relatif entre le chariot (5) et le coulisseau (4),
- la carte (2) étant maintenue sur le coulisseau (4) et déplacée avec ce coulisseau (4),
caractérisé en ce que
le chariot (5) et le coulisseau (4) sont déplaçables parallèlement l'un par rapport à l'autre et que l'unité d'entraînement (7) cause un mouvement relatif entre le coulisseau (4) et le guidage (3) lorsque le chariot (5) bute contre une butée (8, 9).

2. Dispositif selon la revendication 1,
caractérisé en ce que
l'unité d'entraînement (7) est prévue sur le chariot (5).

3. Dispositif selon la revendication 1 ou la revendication 2,
caractérisé en ce que
le guidage (3) est prévu sur une portion de base (10).

4. Dispositif selon au moins l'une des revendications 1 à 3,
caractérisé en ce que
la butée (8, 9) est constituée d'une butée avant (8) et une butée arrière (9) reliées à la portion de base (10).

5. Dispositif selon au moins l'une des revendications 1 à 4,
caractérisé en ce que
l'unité d'entraînement (7) du chariot (5) présente une roue dentée motrice (11) s'engrenant dans une denture (12) du coulisseau (4).

6. Dispositif selon au moins l'une des revendications 1 à 5,
caractérisé en ce que
l'unité de lecture/d'écriture (6, 13) présente une tête magnétique (6) adaptée à être mise en contact avec une bande magnétique (14) de la carte (2) et/ou une bande magnétique d'essai (15) prévue sur le coulisseau (4).

7. Dispositif selon au moins l'une des revendications 1 à 6,
caractérisé en ce que
le coulisseau (4) comporte un ensemble d'étriers (16) pour contacter une puce adapté à être mis en contact avec une puce de données (17) de la carte (2) et/ou une puce d'essai (16) prévue sur le chariot (5).

8. Dispositif selon l'une des revendications 1 à 7,
caractérisé en ce que
l'ensemble d'étriers (16) pour contacter la puce est déplacé vers le haut en dehors d'une glissière de guidage (23) de la carte lorsque la carte (2) se trouve en position de lecture.

9. Dispositif selon l'une des revendications 1 à 8,
caractérisé en ce que
le chariot (5) comporte un entraîneur (18) adapté à s'engrener dans une face frontale de la carte (2) pour introduire la carte (2).

10. Dispositif selon l'une des revendications 1 à 9,
caractérisé en ce que
le coulisseau (4) comporte des éléments de serrage (19) adaptés à s'encliqueter dans des évidements (20) de la portion de base (10) et que les éléments de serrage (19) sont réalisés de manière à coopérer avec la carte (2) lorsque les éléments de serrage (19) ne sont pas encliquetés dans les évidements (20).

11. Dispositif selon l'une des revendications 1 à 10,
caractérisé en ce que
le coulisseau (4) présente une broche de commande (21) avec une saillie (22) qui dépasse la glissière de guidage (23) de la carte du coulisseau (4) lorsque la carte (2) est maintenue sur le coulisseau (4) et qui est retirée lors de l'introduction de la carte (2).

12. Dispositif selon l'une des revendications 1 à 11,
caractérisé en ce que
la broche de commande (21) présente une barbe (24) qui est menée dans une ouverture de commande (25) de la portion de base (10) afin de retirer la saillie (22).

13. Dispositif selon l'une des revendications 1 à 12,
caractérisé en ce qu'
il présente un mécanisme mécanique d'éjection de carte (26) comprenant une portion de commande (27) et une portion de guidage (28).

14. Dispositif selon l'une des revendications 1 à 13,
caractérisé en ce qu'
il présente un panneau (29) relié à la portion de base (10) et permettant l'introduction et l'éjection définies de la carte (2) par l'intermédiaire d'une fente d'entrée (30) prévue dans le panneau (29).

15. Dispositif selon l'une des revendications 1 à 14,
caractérisé en ce que
le panneau (29) comporte un élément de verrouillage (31) qui permet l'introduction de la carte (2) dans la fente (30) lorsque le coulisseau (4) se trouve dans une position correspondante et qui bloque la fente (30) lorsque le coulisseau (4) se trouve dans une autre position de service.

16. Dispositif selon l'une des revendications 1 à 15,
caractérisé en ce que
le coulisseau (4) est maintenu sur la la portion de base (10) .

17. Dispositif selon l'une des revendications 1 à 15,
caractérisé en ce que
le chariot (5) est maintenu sur la portion de base (10).

18. Procédé de commande d'un dispositif de lecture et/ou d'écriture pour des cartes contenant des données, comportant les étapes suivantes:
(A) déplacement d'un chariot (5) directement relié au coulisseau (4) dans une première direction sur la carte (2) introduite dans le coulisseau (4) et maintenue sur celui-ci jusqu'à ce que le chariot (5) entre en contact avec une première butée (8),
(B) déplacement du coulisseau (4) dans une deuxième direction opposée à la première direction, de sorte que la carte (2) est retirée de la zone d'accès de l'utilisateur et maintenue, une unité de lecture/ d'écriture (6, 13) effectuant une opération de lecture et/ou d'écriture à des temps prédéterminés pendant les étapes (A) et (B),
(C) déplacement du chariot (5) dans la deuxième direction jusqu'à ce que ce chariot (5) entre en contact avec une deuxième butée (9), et
(D) déplacement du coulisseau (4) dans la première direction jusqu'à ce que la carte (2) se trouve dans la zone d'accès de l'utilisateur, une unité d'entraînement (7) produisant un déplacement du coulisseau (4) sur un chariot qui bute contre l'une des butées (9, 13) pour causer un mouvement relatif entre le chariot (5) et le coulisseau (4).

19. Procédé selon la revendication 18,
caractérisé en ce que,
pour effectuer une opération d'introduction de la carte, le chariot (5) est déplacé dans la première direction jusqu'à la première butée (8), que le chariot (5) continue d'être entraîné dans la même direction, ce qui provoque un déplacement dans la deuxième direction du coulisseau (4) avec la carte (2) qui y est maintenue jusqu'à ce qu'un entraîneur (18) du chariot (5) est déplacé au-delà de la face frontale de la carte, le déplacement du coulisseau (4) causant le retrait d'une saillie (22) dans la glissière de guidage (23) de la carte, et que le chariot (5) est déplacé dans la deuxième direction, de sorte que l'entraîneur (18) sort la carte (2) du coulisseau (4) en passant par la saillie (22) qui a été retirée.
